# FASCICULE DE BREVET EUROPEEN

(11) **EP 3 456 580 B1**
(45) Date de publication et mention de la délivrance du brevet: **15.12.2021**
(21) Numéro de dépôt: 18191821.0
(22) Date de dépôt: 30.08.2018
(51) Int. Cl.: B60N 2/02, B60N 2/08, B60N 2/07

(54) **MECANISME DE REGLAGE DE SIEGE DE VEHICULE AUTOMOBILE**
EINSTELLUNGSMECHANISMUS FÜR EINEN FAHRZEUGSITZ
ADJUSTMENT MECHANISM FOR A VEHICLE SEAT

(30) Priorité: 14.09.2017 FR 1758546
(43) Date de publication de la demande: 20.03.2019
(73) Titulaire: FAURECIA Sièges d'Automobile, 92000 Nanterre (FR)
(72) Inventeur: DURIEZ, Didier, 91220 Le Plessis-Pâté (FR); BIYJEDDIGUEN, Medhi, 61100 FLERS (FR); PETIT, Fabrice, 61100 SAINT GEORGES DES GROSEILLERS (FR)
(74) Mandataire: Plasseraud IP

(56) Documents cités:
- EP-A1- 1 759 164
- US-A1- 2004 021 457

## Description

La présente invention est relative à un dispositif pour la détection du déplacement relatif de deux composants d'un mécanisme de réglage d'un siège de véhicule automobile l'un par rapport à l'autre.

Un tel mécanisme de réglage de siège de véhicule automobile comprend par exemple une glissière. On connaît le document EP 1 759 164 qui décrit un dispositif pour glissière de siège de véhicule permettant de détecter le déplacement relatif des deux profilés l'un par rapport à l'autre.

Cependant, dans le cas du dispositif décrit, le signal détecté sera uniquement représentatif d'un mouvement relatif des profilés l'un par rapport à l'autre.

La présente invention a notamment pour but de pallier à ces inconvénients en proposant un dispositif permettant de mieux déterminer et contrôler le mouvement des profilés de glissière l'un par rapport à l'autre lors de leurs mouvements relatifs.

A cet effet, l'invention concerne un mécanisme de réglage de siège de véhicule automobile comprenant un premier composant adapté à se déplacer par rapport à un deuxième composant selon un premier degré de liberté, et comprenant :
au moins un premier et un deuxième capteurs montés sur le premier composant,
   au moins une pluralité de protubérances prévues sur le deuxième composant, lesdites protubérances étant espacées les unes des autres selon le premier degré de liberté,
   ledit premier capteur étant monté en regard d'au moins une pluralité de protubérances de manière à pouvoir détecter la présence ou l'absence de protubérance en regard dudit premier capteur lors d'un déplacement relatif des premier et deuxième composants selon le premier degré de liberté,
   ledit deuxième capteur étant monté en regard d'au moins une pluralité de protubérances de manière à pouvoir détecter la présence ou l'absence de protubérance en regard du deuxième capteur lors d'un déplacement relatif des premier et deuxième composants selon le premier degré de liberté,
   les capteurs étant positionnés de sorte qu'il existe un déphasage entre les signaux détectés par les deux capteurs,
le mécanisme de réglage comprenant en outre une unité électronique de contrôle adaptée pour déterminer un sens de déplacement des composants l'un par rapport à l'autre à partir dudit déphasage détecté,
dans lequel :
lesdits premier et deuxième capteurs sont en regard chacun respectivement d'une pluralité de protubérances,
une distance inter-capteurs, correspondant à une distance entre lesdits premier et deuxième capteurs, est différente à la fois d'un décalage entre les motifs des pluralités de protubérance, et d'une somme dudit décalage et d'un multiple entier de ladite longueur d'un motif ou de motifs,
le décalage correspondant à une différence entre d'une part une position d'une protubérance donnée de l'une des pluralités de protubérances, et d'autre part la position d'une protubérance de l'autre pluralité de protubérances, située en vis-à-vis de ladite protubérance donnée,
la longueur dudit motif ou de chacun desdits motifs correspondant à une somme d'une longueur d'une protubérance et d'une longueur d'un espace entre ladite protubérance et une protubérance adjacente de ladite pluralité de protubérances selon le premier degré de liberté (ceci permettant de détecter des signaux différents en fonction de la direction de déplacement avec deux pluralités de protubérances).

Grâce à ces dispositions, l'unité électronique de contrôle permet de déterminer avantageusement également le sens de déplacement d'un profilé par rapport à l'autre.

Dans des modes de réalisation préférés du dispositif selon l'invention, on peut éventuellement avoir recours en outre à l'une et/ou à l'autre des dispositions suivantes :
- lesdites protubérances sont régulièrement espacées entre elles le long du deuxième composant (une telle réalisation correspondant au cas où les protubérances, par exemple des dents, sont régulièrement espacées) ;
- lesdits premier et deuxième capteurs sont en regard respectivement de deux pluralités de protubérances régulièrement espacées entre elles, avec un même espacement entre lesdites deux pluralités de protubérances,
   une distance inter-capteurs, correspondant à une distance entre lesdits deux capteurs, est nulle,
   et lesdites deux pluralités de protubérances présentent un décalage entre elles, non nul et différent de la longueur d'un motif,
   le décalage correspondant à une différence entre d'une part une position d'une protubérance donnée de l'une des pluralités de protubérances, et d'autre part la position d'une protubérance de l'autre pluralité de protubérances, située en vis-à-vis de ladite protubérance donnée,
   la longueur d'un motif correspondant à la somme de la longueur d'une protubérance et de la longueur de l'espace entre ladite protubérance et une protubérance adjacente de ladite pluralité de protubérances (Cas de deux capteurs qui regardent dans deux directions opposées) ;
- lesdites protubérances sont des dents dont au moins certaines sont utilisées pour le verrouillage de la position relative de déplacement entre lesdits composants ;
- le mécanisme de réglage de siège de véhicule automobile comprend une glissière :
   un premier profilé sur lequel sont montés lesdits premier et deuxième capteurs est le profilé supérieur de la glissière,
   un deuxième profilé comprenant ladite ou lesdites pluralités de dents est le profilé inférieur de la glissière,
   le premier degré de liberté est une direction longitudinale de coulissement respectif des premier et deuxième profilés ;
- les deux capteurs sont montés sur deux ailes latérales opposées du profilé supérieur,
   chaque pluralité de dents est disposée sur une aile latérale opposée du profilé inférieur,
   chaque aile latérale du profilé supérieur étant placée en regard d'une aile latérale du profilé inférieur, de sorte que chaque pluralité de dents du profilé inférieur est en regard d'un capteur du profilé supérieur ;
- le profilé supérieur comprend une ou plusieurs ouvertures dans l'une et/ou l'autre de ses ailes latérales,
   lesdits capteurs sont montés solidaires d'un boitier, ledit boitier étant monté sur ledit profilé supérieur de sorte que chaque capteur est en regard d'une desdites ouvertures (cette réalisation offrant compacité et praticité) ;
- le boitier est fixé à une âme supérieure horizontale du profilé supérieur (cette réalisation offrant Compacité) ;
- le boitier est maintenu à l'âme supérieure horizontale du profilé supérieur par clipsage de languettes formées à la surface du boitier dans des ouvertures formées dans ladite âme (cette réalisation offrant un montage facilité) ;
- chaque capteur est formé par un capteur à effet Hall adapté pour détecter la présence ou l'absence de dents en regard dudit capteur (Avantages : Fiabilité de ce type de capteur / faible encombrement).

Selon un autre aspect, l'invention se rapporte à un siège de véhicule comprenant un tel mécanisme de réglage de siège de véhicule automobile.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est un schéma représentatif d'un siège de véhicule automobile,
- la figure 2 est une vue partielle en perspective d'une glissière de siège automobile,
- la figure 3 est une vue sectionnelle de côté de la glissière de la figure 2 selon un exemple donné à titre illustratif pour la compréhension de l'invention,
- la figure 4a est une vue schématique de côté d'un profil de glissière dans l'exemple de la figure 3,
- les figures 4b et 4c présentent deux diagrammes en fonction du temps des signaux mesurés par les deux capteurs selon le sens de déplacement du profilé mobile de glissière dans l'exemple de la figure 3,
- la figure 5 est une vue en perspective de détail du dessus de la glissière,
- la figure 6a est une vue en perspective du boîtier 7, selon un exemple donné à titre illustratif pour la compréhension de l'invention,
- la figure 6b est une vue de face d'un boîtier selon un mode de réalisation,
- la figure 7 est une vue similaire à la figure 5 sans le connecteur.

Sur les différentes figures, les mêmes références désignent des éléments identiques ou similaires.

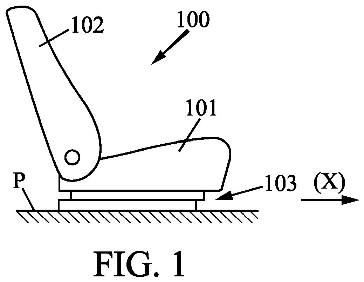

La **figure 1** représente schématiquement et partiellement un siège de véhicule 100 comprenant une assise 101 avec une armature d'assise, un dossier 102 monté sur l'assise 101, le tout étant monté coulissant par rapport au plancher P du véhicule au moyen d'un système de glissières longitudinales 103. L'avant du siège de véhicule 100 est situé sur la droite de la figure 1, et l'arrière sur la gauche de la figure 1. La direction longitudinale X est la direction avant-arrière, indépendamment de l'orientation du siège lui-même dans le véhicule. D'autres architectures de sièges de véhicules automobiles sont envisageables.

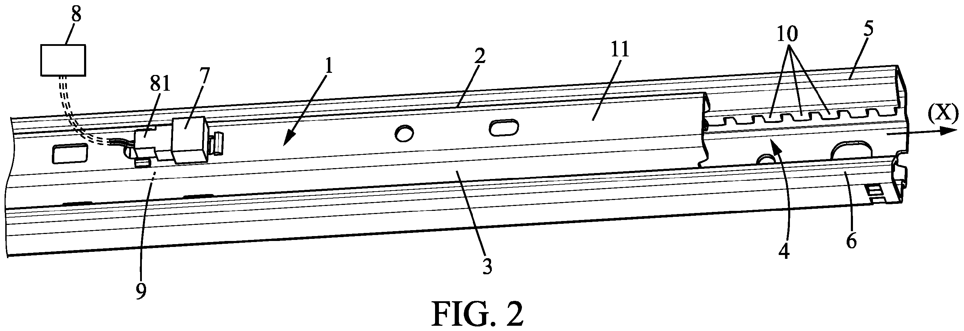

Dans un tel système de glissières, on utilise généralement deux glissières parallèles. L'une de ces glissières va être décrite ci-après, tel qu'illustrée à la **figure 2****,** l'autre glissière pouvant être identique ou similaire. Un premier profilé supérieur 1 est adapté à coulisser dans un deuxième profilé inférieur 4, selon une direction longitudinale X. Le deuxième profilé inférieur 4 a vocation à être monté fixé au plancher P. Le premier profilé supérieur 1 a vocation à être monté fixé à l'assise 101. Les mots « inférieur » et « supérieur » sont utilisés en faisant référence à la verticale. Toutefois, dans d'autres exemples non représentés, les profilés de la glissière ne sont pas nécessairement un profilé inférieur et un profilé supérieur.

Le système comprend deux capteurs 9 montés sur le profilé supérieur 1.

Le profilé inférieur 4 comprend également une pluralité de protubérances 10 espacées les unes des autres selon la direction longitudinale.

Lorsque les profilés sont montés l'un dans l'autre pour coulisser, les protubérances 10 sont ainsi placées en regard des capteurs 9.

Chaque capteur 9 est adapté pour détecter la présence ou l'absence de protubérance 10 en regard de celui-ci. Lors du déplacement des profilés l'un par rapport à l'autre, chaque capteur 9 détecte le passage des protubérances en regard de celui-ci.

Les capteurs 9 sont positionnés l'un par rapport à l'autre selon la direction longitudinale, et par rapport à la position et à l'espacement entre les protubérances 10, de sorte qu'il existe un déphasage entre les signaux détectés par les deux capteurs 9. Le système comprend par ailleurs une unité électronique de contrôle 8 qui permet de déterminer, à partir du déphasage détecté entre les signaux des deux capteurs 9, le sens de coulissement des profilés l'un par rapport à l'autre.

Plus particulièrement, le profilé supérieur 1 est fixé à l'assise et coulisse selon la direction longitudinale dans le profilé inférieur 4 fixé au plancher. Comme représenté sur la figure 2, selon un mode de réalisation, le profilé supérieur 1 présente une section sensiblement en U avec deux ailes 2, 3 latérales s'étendant sensiblement verticalement vers le bas depuis une âme supérieure horizontale 11. Le profilé inférieur 4 présente également une section en U avec deux ailes latérales 5, 6 s'étendant en regard des ailes latérales 2, 3 du profilé supérieur 1.

On définira la **distance inter-capteurs** comme la distance entre les premier et deuxième capteurs 9 selon la direction longitudinale.

On définira la **longueur d'un motif** par la somme d'une longueur selon la direction longitudinale d'une protubérance 10 et d'une longueur selon la direction longitudinale d'un espace entre ladite protubérance et une protubérance adjacente le long de la direction longitudinale.

La description ci-dessous illustre trois modes de réalisation possibles du système de glissière, notamment dans le cas où les protubérances sont régulièrement espacées, mais n'exclut pas d'autres modes de réalisation possibles de l'invention, notamment dans le cas où les protubérances ne seraient pas régulièrement espacées.

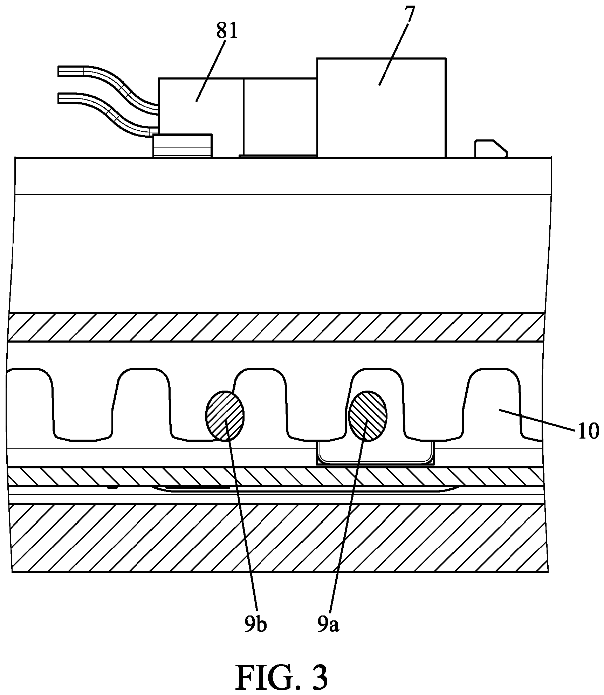

Dans un exemple illustré à la **figure 3****,** donné à titre illustratif pour la compréhension de l'invention, le système comprend un capteur 9a avant placé en avant selon le sens de déplacement du véhicule par rapport à un capteur 9b arrière, les capteurs avant 9a et arrière 9b étant montés à deux positions longitudinalement différentes le long de l'une des ailes latérales 2 du profilé.

Le profilé inférieur 4 comprend une pluralité de protubérances 10, qui sont typiquement des dents, s'étendant le long d'une de ses ailes latérales 5, en regard de l'aile latérale 2 du profilé supérieur 1 comprenant les deux capteurs 9. Les protubérances 10 sont régulièrement espacées le long de la direction longitudinale. Les protubérances sont par exemple formées par des découpes dans l'aile latérale du profilé inférieur 4. Les protubérances sont par exemple utilisées pour le verrouillage de la position relative de coulissement entre lesdits profilés, par interaction mécanique avec un verrou (non représenté) monté sur le profilé supérieur 4. Le verrou comprend notamment un organe de verrouillage monté mobile par rapport au profilé supérieur entre une première position et une deuxième position, et sollicité par un élément de sollicitation vers sa première position, où il coopère avec une protubérance du profilé inférieur de manière à interdire le déplacement relatif des deux profilés selon la direction longitudinale. Sous l'action d'un utilisateur, l'organe de verrouillage peut être déplacé, à l'encontre de l'action de l'élément de sollicitation, vers sa deuxième position, où il ne coopère plus avec le profilé inférieur, de manière à autoriser ce déplacement relatif des deux profilés selon la direction longitudinale.

Les protubérances 10 seront par exemple typiquement utilisées pour verrouiller les profilés de glissière l'un par rapport à l'autre.

Dans cet exemple, la distance inter-capteurs est différente à la fois de la longueur d'un motif et d'un multiple entier de la longueur d'un motif.

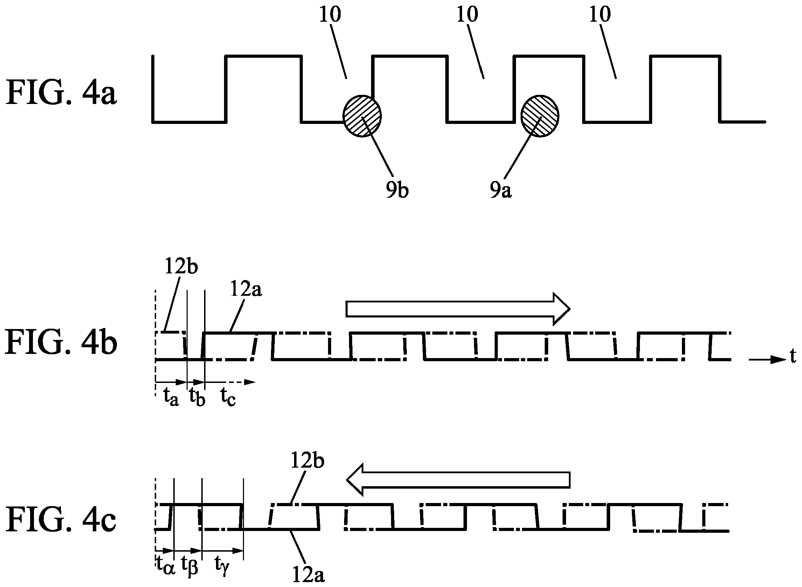

En fonctionnement, illustré aux **figures 4a à 4c****,** lorsque les deux profilés sont en mouvement l'un par rapport à l'autre, les protubérances 10 se déplacent en regard des capteurs 9. Considérons une position initiale illustrée à la figure 4a dans laquelle un premier capteur 9b est placé en regard d'une protubérance 10 alors que le deuxième capteur 9a est en regard d'une ouverture. Lors du déplacement du profilé supérieur 1 (et donc des capteurs 9) par rapport au profilé inférieur 4 (et donc des protubérances), les protubérances 10 défilent en regard des capteurs, et le signal détecté par les deux capteurs 9 est différent selon que le profilé supérieur 1 coulisse vers l'avant du véhicule ou vers l'arrière.

Plus particulièrement, dans le cas de la position des capteurs 9 décrite ci-dessus, initialement il y a une différence entre le signal du premier et du deuxième capteur 9 (sur la période tₐ illustrée sur la figure 4b). Le signal 12a représente le signal émis par le capteur avant 9a. Le signal 12b représente le signal émis par le capteur arrière 9b. Si le profilé supérieur 1 coulisse vers l'avant du véhicule en regard des protubérances 10, dès lors que le capteur arrière 9b a parcouru entièrement la protubérance en regard, le capteur arrière 9b est alors en regard d'une ouverture, et la différence entre les signaux des deux capteurs 9 devient nulle (période t_{b} sur la figure 4b). Ensuite une différence réapparaît lorsque le capteur avant 9a passe en regard d'une protubérance tandis que le capteur arrière 9b est en regard d'une ouverture (période t_{c} sur la figure 4b).

Pour cette même position initiale des capteurs, dans le cas où le profilé supérieur 1 se déplace vers l'arrière, comme représenté sur la figure 4c, en un plus bref intervalle de temps t_{α} que dans le cas décrit précédemment, les deux capteurs 9 sont tous deux en regard d'une protubérance.

On obtient donc, selon que le profilé supérieur 1 se déplace vers l'avant ou vers l'arrière du véhicule, des déphasages différents, illustrés aux figures 4b et 4c.

L'unité électronique de contrôle 8 comprend un calculateur programmé pour déterminer le sens de déplacement de la glissière à partir des signaux issus des deux capteurs. L'information peut ensuite être transmise à un calculateur de bord, qui peut s'en servir. Une utilisation en est par exemple le déclenchement ou non de coussins gonflables de sécurité situés à l'avant, selon le sens de coulissement détecté. Une utilisation en est par exemple d'informer l'utilisateur sur sa position de réglage, lui permettant une préconisation de position de réglage, ou de mémoriser sa position de réglage initiale. Le cas échéant, l'unité électronique de contrôle est disposée au niveau de la glissière, ou d'une unité centrale du véhicule.

Le capteur est par exemple un capteur à effet Hall adapté pour détecter la présence ou l'absence de protubérances 10 en regard de ce dernier.

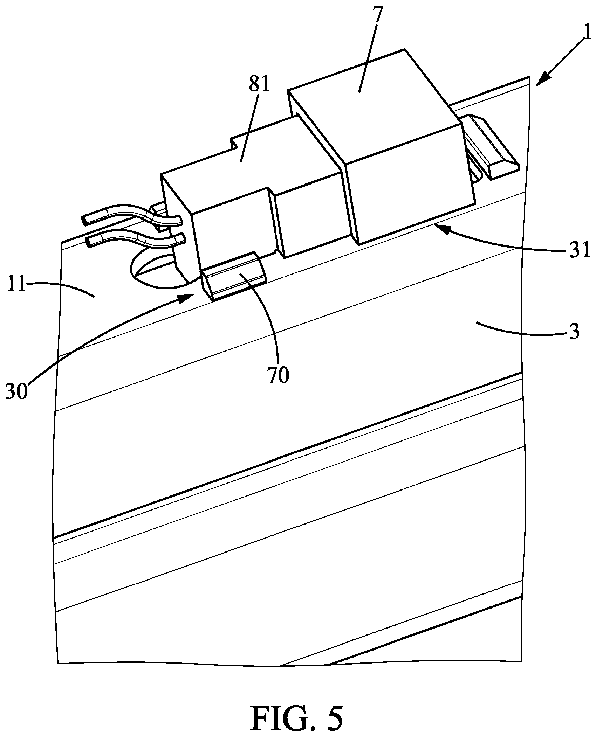

Les capteurs 9 sont avantageusement montés sur un boitier 7, qui est lui-même monté sur le profilé supérieur 1, comme illustré à la **figure 5****.**

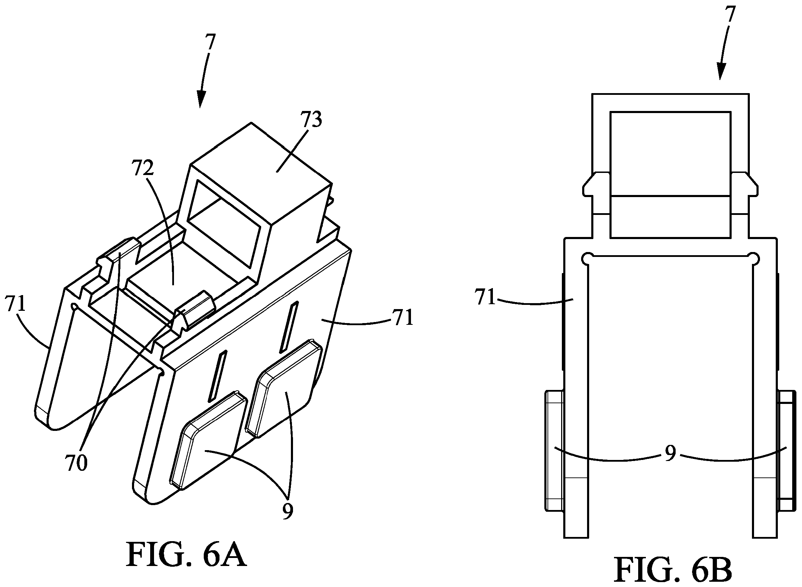

Le boitier 7, illustré dans le cas de l'exemple susmentionné à la **figure 6a****,** présente par exemple une section en U avec une portion de fixation 72 au profilé supérieur, d'où s'étendent deux parois latérales 71. La portion de fixation 72 au profilé supérieur est une portion centrale typiquement horizontale lorsque le boitier est monté dans le profilé supérieur 1, et qui présente par exemple des languettes de montage 70 adaptées pour s'insérer dans des ouvertures 30 prévues dans l'âme 11 du profilé supérieur.

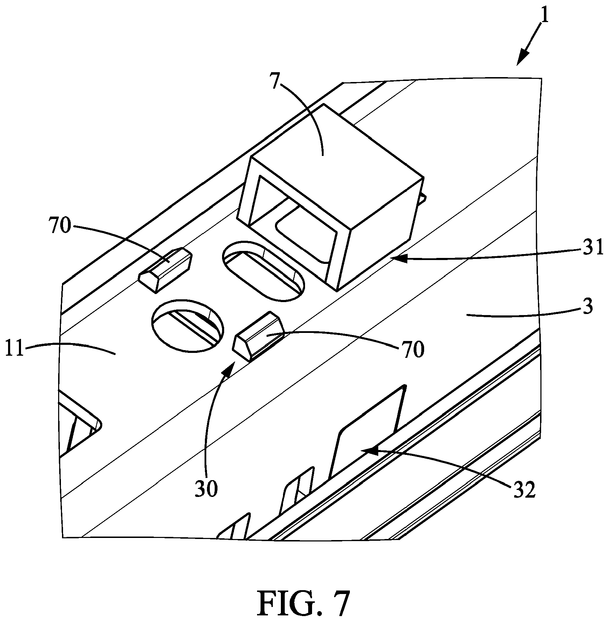

Le boitier 7 présente également avantageusement une portion de réception 73 d'un connecteur 81 relié à l'unité électronique de contrôle 8. L'âme du profilé supérieur 11 présente par exemple une ouverture 31 adaptée pour recevoir la portion de réception 73 qui est par exemple insérée à travers ladite ouverture 31 depuis le bas, et dépasse à travers l'ouverture 31 vers le haut depuis l'âme du profilé supérieur 1 comme illustré à la **figure 7****.**

Dans un exemple particulier, le connecteur 81, lorsqu'il est monté dans la portion de réception 73, permet d'assurer également la fonction de maintien des languettes 70 dans les ouvertures 30 comme illustré à la **figure 5****.** En effet, les languettes 70 insérées dans les ouvertures 30 sont maintenues en position insérée par la contrainte que le connecteur 81 exerce en les maintenant verticales, empêchant leur retrait.

Les deux capteurs 9 sont par exemple côte à côte, espacés selon la direction longitudinale, sur une paroi latérale du boitier, comme illustré à la figure 6a. Le profilé supérieur comprend, dans cette configuration, par exemple deux ouvertures 32 dans l'aile latérale correspondante 2, de sorte que, lorsque le boitier est monté dans le profilé supérieur 1, les deux capteurs 9 sont en regard des protubérances 10 du profilé inférieur à travers les deux ouvertures 32 de l'aile latérale 2 du profilé supérieur 1.

Dans un **mode de réalisation,** comme représenté sur la figure 6b, le profilé inférieur 4 pourra comprendre deux pluralités de protubérances, une sur chacune des ailes opposées 5, 6 du profilé inférieur 4, et le profilé supérieur pourra comprendre des capteurs 9 placés au niveau des deux ailes latérales 2, 3 du profilé supérieur 1 en regard chacun respectivement de l'une des deux pluralités de protubérances.

Les pluralités de protubérances peuvent être décalées, de sorte qu'il y a une différence entre la position longitudinale d'une protubérance donnée de l'une des pluralités de protubérance et la position longitudinale d'une protubérance de l'autre pluralité de protubérances, située en vis-à-vis de ladite protubérance donnée.

Les deux capteurs 9 sont par ailleurs dans ce cas décalés d'une distance inter-capteurs qui sera différente à la fois d'un décalage entre les motifs des pluralités de protubérance et d'une somme dudit décalage et d'un multiple entier de la longueur d'un motif.

Dans ce mode de réalisation, les deux capteurs 9 peuvent avantageusement être montés sur les parois opposées du boitier 7 décrit précédemment, comme illustré à la **figure 6b****.** Les deux capteurs 9 sont donc montés en des positions longitudinalement différentes sur l'une et l'autre des parois du boitier 7.

En **variante de ce mode de réalisation,** les deux pluralités de protubérances pourront être alignées de sorte que chaque protubérance de la pluralité sur une des ailes latérales 5 du profilé inférieur 4 sera alignée avec une protubérance de la pluralité en regard sur l'autre aile latérale 6. La distance inter-capteurs est différente à la fois de la longueur d'un motif et d'un multiple entier de la longueur d'un motif. On obtiendra alors la même évolution du déphasage en fonction du temps que pour le premier mode de réalisation décrit.

En **variante de ce mode de réalisation,** les deux pluralités de protubérances sont décalées d'un décalage longitudinal entre elles non nul et différent de la longueur d'un motif, et les capteurs sont alignés, selon la direction longitudinale.

Dans un **autre mode de réalisation,** non illustré, les capteurs 9 pourront avoir des positions longitudinales identiques, c'est-à-dire que la distance inter-capteurs sera nulle. Dans ce mode de réalisation pour qu'un signal discriminant entre le déplacement vers l'avant et vers l'arrière du profilé supérieur par rapport au profilé inférieur 4 puisse être mesuré, les pluralités de protubérances présentent un décalage longitudinal entre elles, non nul et différent de la longueur d'un motif et d'un multiple entier de la longueur d'un motif.

Pour déterminer le sens de déplacement, le déphasage entre les deux signaux est différent de 180°. Il peut par exemple être de l'ordre de quelques degrés, en étant strictement positif de manière à ce que le sens de déplacement soit détecté avec certitude. Avec un déphasage faible, le temps est réduit, après la détection du créneau d'un premier capteur, pour déterminer le sens de déplacement de la glissière.

Le système décrit ci-dessus est particulièrement bien adapté à une glissière, qui réalise une course longue, et dispose de place pour y installer le système. Les premier et deuxième composants sont alors un premier et un deuxième profilé, respectivement. Le premier degré de liberté est une direction de translation. Bien que le système ait été présenté ci-dessus par référence à une glissière, il pourrait aussi être utilisé dans d'autres mécanismes de réglage de siège de véhicule (par exemple une articulation de siège de véhicule automobile adaptée pour régler l'orientation relative de deux éléments de siège de véhicule automobile autour d'un axe transversal Y, comprenant un flasque fixe et un flasque mobile rotatif par rapport au flasque fixe).

## Revendications

1. Mécanisme de réglage de siège de véhicule automobile comprenant un premier composant (1) adapté à se déplacer par rapport à un deuxième composant (4) selon un premier degré de liberté, et comprenant :
au moins un premier et un deuxième capteurs (9) montés sur le premier composant (1),
au moins une pluralité de protubérances (10) prévues sur le deuxième composant, lesdites protubérances étant espacées les unes des autres selon le premier degré de liberté,
ledit premier capteur (9) étant monté en regard d'au moins une pluralité de protubérances (10) de manière à pouvoir détecter la présence ou l'absence de protubérance en regard dudit premier capteur lors d'un déplacement relatif des premier et deuxième composants selon le premier degré de liberté,
ledit deuxième capteur (9) étant monté en regard d'au moins une pluralité de protubérances (10) de manière à pouvoir détecter la présence ou l'absence de protubérance en regard du deuxième capteur lors d'un déplacement relatif des premier et deuxième composants selon le premier degré de liberté,
les capteurs (9) étant positionnés de sorte qu'il existe un déphasage entre les signaux détectés par les deux capteurs (9),
le mécanisme de réglage comprenant en outre une unité électronique de contrôle (8) adaptée pour déterminer un sens de déplacement des composants l'un par rapport à l'autre à partir dudit déphasage détecté
dans lequel :
lesdits premier et deuxième capteurs (9) sont en regard chacun respectivement d'une pluralité de protubérances (10),
une distance inter-capteurs, correspondant à une distance entre lesdits premier et deuxième capteurs, est différente à la fois d'un décalage entre les motifs des pluralités de protubérance, et d'une somme dudit décalage et d'un multiple entier de ladite longueur d'un motif ou de motifs,
le décalage correspondant à une différence entre d'une part une position d'une protubérance donnée de l'une des pluralités de protubérances, et d'autre part la position d'une protubérance de l'autre pluralité de protubérances, située en vis-à-vis de ladite protubérance donnée,
la longueur dudit motif ou de chacun desdits motifs correspondant à une somme d'une longueur d'une protubérance et d'une longueur d'un espace entre ladite protubérance et une protubérance adjacente de ladite pluralité de protubérances selon le premier degré de liberté.

2. Mécanisme de réglage de siège de véhicule automobile selon la revendication 1, dans lequel :
lesdites protubérances (10) sont régulièrement espacées entre elles le long du deuxième composant.

3. Mécanisme de réglage de siège de véhicule automobile selon la revendication 1 ou la revendication 2 dans lequel :
lesdits premier et deuxième capteurs (9) sont en regard respectivement de deux pluralités de protubérances (10) régulièrement espacées entre elles, avec un même espacement entre lesdites deux pluralités de protubérances,
une distance inter-capteurs, correspondant à une distance entre lesdits deux capteurs, est nulle,
et lesdites deux pluralités de protubérances présentent un décalage entre elles, non nul et différent de la longueur d'un motif,
le décalage correspondant à une différence entre d'une part une position d'une protubérance donnée de l'une des pluralités de protubérances, et d'autre part la position d'une protubérance de l'autre pluralité de protubérances, située en vis-à-vis de ladite protubérance donnée,
la longueur d'un motif correspondant à la somme de la longueur d'une protubérance et de la longueur de l'espace entre ladite protubérance et une protubérance adjacente de ladite pluralité de protubérances.

4. Mécanisme de réglage de siège de véhicule automobile selon l'une quelconque des revendications 1 à 3, dans lequel :
lesdites protubérances (10) sont des dents dont au moins certaines sont utilisées pour le verrouillage de la position relative de déplacement entre lesdits composants.

5. Mécanisme de réglage de siège de véhicule automobile selon l'une quelconque des revendications 1 à 4, dans lequel le mécanisme de réglage de siège de véhicule automobile comprend une glissière dans laquelle :
un premier profilé (1) sur lequel sont montés lesdits premier et deuxième capteurs est le profilé supérieur de la glissière,
un deuxième profilé (4) comprenant ladite ou lesdites pluralités de dents est le profilé inférieur de la glissière,
le premier degré de liberté est une direction longitudinale de coulissement respectif des premier et deuxième profilés.

6. Mécanisme de réglage de siège de véhicule automobile selon la revendication 1 ou 3 et selon la revendication 5, dans lequel :
les deux capteurs (9) sont montés sur deux ailes latérales (2, 3) opposées du profilé supérieur (1),
chaque pluralité de dents est disposée sur une aile latérale (5, 6) opposée du profilé inférieur (4),
chaque aile latérale du profilé supérieur étant placée en regard d'une aile latérale du profilé inférieur, de sorte que chaque pluralité de dents du profilé inférieur est en regard d'un capteur du profilé supérieur.

7. Mécanisme de réglage de siège de véhicule automobile selon l'une quelconque des revendications 5 et 6 dans lequel :
le profilé supérieur (1) comprend une ou plusieurs ouvertures (32) dans l'une et/ou l'autre de ses ailes latérales (2, 3),
lesdits capteurs (9) sont montés solidaires d'un boitier (7), ledit boitier étant monté sur ledit profilé supérieur de sorte que chaque capteur est en regard d'une desdites ouvertures (32).

8. Mécanisme de réglage de siège de véhicule automobile selon la revendication 7 dans lequel le boitier (7) est fixé à une âme supérieure (11) horizontale du profilé supérieur (1).

9. Mécanisme de réglage de siège de véhicule automobile selon la revendication 8 dans lequel le boitier (7) est maintenu à l'âme supérieure (11) horizontale du profilé supérieur (1) par clipsage de languettes (30) formées à la surface du boitier (7) dans des ouvertures (30) formées dans ladite âme (11).

10. Mécanisme de réglage de siège de véhicule automobile selon l'une quelconque des revendications 1 à 9 dans lequel chaque capteur (9) est formé par un capteur à effet Hall adapté pour détecter la présence ou l'absence de dents en regard dudit capteur.

11. Siège de véhicule comprenant un mécanisme de réglage de siège de véhicule automobile selon l'une quelconque des revendications précédentes.

## Patentansprüche

1. Kraftfahrzeugsitz-Einstellmechanismus, umfassend eine erste Komponente (1), die angepasst ist, um sich relativ zu einer zweiten Komponente (4) gemäß einem ersten Freiheitsgrad zu bewegen, und umfassend:
mindestens einen ersten und einen zweiten Sensor (9), die an der ersten Komponente (1) angebracht sind,
mindestens eine Vielzahl von Vorsprüngen (10), die an der zweiten Komponente vorgesehen sind, wobei die Vorsprünge gemäß dem ersten Freiheitsgrad voneinander beabstandet sind,
wobei der erste Sensor (9) gegenüber mindestens einer Vielzahl von Vorsprüngen (10) angebracht ist, um das Vorhandensein oder Fehlen von Vorsprüngen gegenüber dem ersten Sensor während einer Relativbewegung der ersten und zweiten Komponente gemäß dem ersten Freiheitsgrad erfassen zu können,
wobei der zweite Sensor (9) gegenüber mindestens einer Vielzahl von Vorsprüngen (10) angebracht ist, um das Vorhandensein oder Fehlen von Vorsprüngen gegenüber dem zweiten Sensor während einer Relativbewegung der ersten und zweiten Komponente gemäß dem ersten Freiheitsgrad erfassen zu können,
wobei die Sensoren (9) so positioniert sind, dass zwischen den von den beiden Sensoren (9) erfassten Signalen eine Phasenverschiebung besteht,
wobei der Einstellmechanismus ferner eine elektronische Steuereinheit (8) umfasst, die angepasst ist, um eine Bewegungsrichtung der Komponenten relativ zueinander ausgehend von der erfassten Phasenverschiebung zu bestimmen, wobei:
der erste und der zweite Sensor (9) jeweils einer Vielzahl von Vorsprüngen (10) gegenüber angeordnet sind,
ein Sensoren-Abstand, der einem Abstand zwischen dem ersten und dem zweiten Sensor entspricht, sich sowohl von einem Versatz zwischen den Mustern der Vielzahlen von Vorsprüngen als auch von einer Summe aus dem Versatz und einem ganzzahligen Vielfachen der Länge eines Musters oder von Mustern unterscheidet,
wobei der Versatz einer Differenz zwischen einerseits einer Position eines gegebenen Vorsprungs der einen Vielzahl von Vorsprüngen und andererseits der Position eines Vorsprungs der anderen Vielzahl von Vorsprüngen entspricht, der gegenüber dem gegebenen Vorsprung angeordnet ist,
wobei die Länge des Musters oder jedes der Muster einer Summe aus einer Länge eines Vorsprungs und einer Länge eines Raums zwischen dem Vorsprung und einem benachbarten Vorsprung der Vielzahl von Vorsprüngen gemäß dem ersten Freiheitsgrad entspricht.

2. Kraftfahrzeugsitz-Einstellmechanismus nach Anspruch 1, wobei:
die Vorsprünge (10) entlang der zweiten Komponente regelmäßig voneinander beabstandet sind.

3. Kraftfahrzeugsitz-Einstellmechanismus nach Anspruch 1 oder Anspruch 2, wobei:
der erste und der zweite Sensor (9) jeweils gegenüber zwei Vielzahlen von Vorsprüngen (10) angeordnet sind, die regelmäßig voneinander beabstandet sind, mit einem gleichen Abstand zwischen den zwei Vielzahlen von Vorsprüngen,
ein Sensoren-Abstand, der einem Abstand zwischen den zwei Sensoren entspricht, gleich Null ist,
und die zwei Vielzahlen von Vorsprüngen einen Versatz gegeneinander aufweisen, der nicht gleich Null und verschieden von der Länge eines Musters ist,
wobei der Versatz einer Differenz zwischen einerseits einer Position eines gegebenen Vorsprungs einer der Vielzahlen von Vorsprüngen und andererseits der Position eines Vorsprungs der anderen Vielzahl von Vorsprüngen entspricht, der gegenüber dem gegebenen Vorsprung angeordnet ist,
wobei die Länge eines Musters der Summe aus der Länge eines Vorsprungs und der Länge des Raums zwischen dem Vorsprung und einem benachbarten Vorsprung der Vielzahl von Vorsprüngen entspricht.

4. Kraftfahrzeugsitz-Einstellmechanismus nach einem der Ansprüche 1 bis 3, wobei:
die Vorsprünge (10) Zähne sind, von denen zumindest einige zum Verriegeln der Relativposition der Bewegung zwischen den Komponenten verwendet werden.

5. Kraftfahrzeugsitz-Einstellmechanismus nach einem der Ansprüche 1 bis 4, wobei der Kraftfahrzeugsitz-Einstellmechanismus eine Gleitschiene umfasst, wobei:
ein erstes Profil (1), auf dem der erste und der zweite Sensor montiert sind, das obere Profil der Gleitschiene ist,
ein zweites Profil (4), das die Vielzahl oder die Vielzahlen von Zähnen umfasst, das untere Profil der Gleitschiene ist,
der erste Freiheitsgrad eine jeweilige longitudinale Gleitrichtung des ersten und zweiten Profils ist.

6. Kraftfahrzeugsitz-Einstellmechanismus nach Anspruch 1 oder 3 und nach Anspruch 5, wobei:
die beiden Sensoren (9) an zwei gegenüberliegenden Seitenflügeln (2, 3) des oberen Profils (1) angebracht sind,
jede Vielzahl von Zähnen an einem dem unteren Profil (4) gegenüberliegenden Seitenflügel (5, 6) angeordnet ist,
wobei jeder Seitenflügel des oberen Profils einem Seitenflügel des unteren Profils gegenüber angeordnet ist, so dass jede Vielzahl von Zähnen des unteren Profils einem Sensor des oberen Profils gegenüber angeordnet ist.

7. Kraftfahrzeugsitz-Einstellmechanismus nach einem der Ansprüche 5 und 6, wobei:
das obere Profil (1) eine oder mehrere Öffnungen (32) in dem einem und/oder dem anderen seiner Seitenflügel (2, 3) aufweist,
die Sensoren (9) fest mit einem Gehäuse (7) verbunden montiert sind, wobei das Gehäuse auf dem oberen Profil so montiert ist, dass jeder Sensor einer der Öffnungen (32) gegenüber angeordnet ist.

8. Kraftfahrzeugsitz-Einstellmechanismus nach Anspruch 7, wobei das Gehäuse (7) an einem horizontalen oberen Kern (11) des oberen Profils (1) befestigt ist.

9. Kraftfahrzeugsitz-Einstellmechanismus nach Anspruch 8, wobei das Gehäuse (7) an dem horizontalen oberen Kern (11) des oberen Profils (1) durch Einklipsen von an der Oberfläche des Gehäuses (7) ausgebildeten Zungen (30) in Öffnungen (30) gehalten wird, die in dem Kern (11) ausgebildet sind.

10. Kraftfahrzeugsitz-Einstellmechanismus nach einem der Ansprüche 1 bis 9, wobei jeder Sensor (9) durch einen Hall-Effekt-Sensor gebildet ist, der dazu eingerichtet ist, das Vorhandensein oder Fehlen von Zähnen gegenüber dem Sensor zu erfassen.

11. Fahrzeugsitz, umfassend einen Kraftfahrzeugsitz-Einstellmechanismus nach einem der vorhergehenden Ansprüche.

## Claims

1. Adjustment mechanism for motor vehicle seat, comprising a first component (1) able to move relative to a second component (4) along a first degree of freedom, and comprising:
at least a first and a second sensor (9) which are mounted on the first component (1),
at least one plurality of protuberances (10) provided on the second component, said protuberances being spaced apart from one another along the first degree of freedom,
said first sensor (9) being mounted facing at least one plurality of protuberances (10) so as to be able to detect the presence or absence of a protuberance facing said first sensor during a relative movement of the first and second components along the first degree of freedom,
said second sensor (9) being mounted facing at least one plurality of protuberances (10) so as to be able to detect the presence or absence of a protuberance facing the second sensor during a relative movement of the first and second components along the first degree of freedom,
the sensors (9) being positioned so that there is a phase difference between the signals detected by the two sensors (9),
the adjustment mechanism further comprising an electronic control unit (8) able to determine a direction of movement of the components in relation to one another, from said detected phase difference,
wherein:
said first and second sensors (9) are each respectively facing a plurality of protuberances (10),
an inter-sensor distance, corresponding to a distance between said first and second sensors, is different both from an offset between the patterns of the pluralities of protuberances, and from a sum of said offset and an integer multiple of said length of a pattern or patterns,
the offset corresponding to a difference between a position of a given protuberance of one of the pluralities of protuberances, and the position of a protuberance of the other plurality of protuberances, located opposite said given protuberance,
the length of said pattern or of each of said patterns corresponding to a sum of a length of a protuberance and a length of a space between said protuberance and an adjacent protuberance of said plurality of protuberances along the first degree of

2. Adjustment mechanism for motor vehicle seat according to claim 1, wherein:
said protuberances (10) are regularly spaced apart from one another along the second component.

3. Adjustment mechanism for motor vehicle seat according to claim 1 or claim 2, wherein:
said first and second sensors (9) are respectively facing two pluralities of protuberances (10) regularly spaced apart from one another, with a same spacing between said two pluralities of protuberances,
an inter-sensor distance, corresponding to a distance between said two sensors, is zero,
and said two pluralities of protuberances have a non-zero offset between them which is different from the length of a pattern,
the offset corresponding to a difference between a position of a given protuberance of one of the pluralities of protuberances and the position of a protuberance of the other plurality of protuberances, located opposite said given protuberance,
the length of a pattern corresponding to the sum of the length of a protuberance and the length of the space between said protuberance and an adjacent protuberance of said plurality of protuberances.

4. Adjustment mechanism for motor vehicle seat according to any one of claims 1 to 3, wherein:
said protuberances (10) are teeth, of which at least some are used to lock the relative position of movement between said components.

5. Adjustment mechanism for motor vehicle seat according to any one of claims 1 to 4, wherein the adjustment mechanism for motor vehicle seat comprises a rail in which:
a first section (1), on which said first and second sensors are mounted, is the upper section of the rail,
a second section (4), comprising said one or more pluralities of teeth, is the lower section of the rail,
the first degree of freedom is a longitudinal direction of respective sliding of the first and second sections.

6. Adjustment mechanism for motor vehicle seat according to any of claim 1 or 3 and claim 5, wherein:
the two sensors (9) are mounted on two opposite lateral flanges (2, 3) of the upper section (1),
each plurality of teeth is arranged on an opposite lateral flange (5, 6) of the lower section (4),
each lateral flange of the upper section being placed facing a lateral flange of the lower section, so that each plurality of teeth of the lower section is facing a sensor of the upper section.

7. Adjustment mechanism for motor vehicle seat according to any one of claims 5 and 6, wherein:
the upper section (1) comprises one or more openings (32) in one and/or the other of its lateral flanges (2, 3),
said sensors (9) are mounted integral with a housing (7), said housing being mounted on said upper section such that each sensor is facing one of said openings (32).

8. Adjustment mechanism for motor vehicle seat according to claim 7, wherein the housing (7) is fixed to a horizontal upper web (11) of the upper section (1).

9. Adjustment mechanism for motor vehicle seat according to claim 8, wherein the housing (7) is held on the horizontal upper web (11) of the upper section (1) by tabs (30) formed on the surface of the housing (7) which clip into openings (30) formed in said web (11).

10. Adjustment mechanism for motor vehicle seat according to any one of claims 1 to 9, wherein each sensor (9) is formed by a Hall effect sensor able to detect the presence or absence of teeth facing said sensor.

11. Vehicle seat comprising an adjustment mechanism for motor vehicle seat according to any one of the preceding claims.
